# EUROPEAN PATENT SPECIFICATION

(11) **EP 3 585 548 B1**
(45) Date of publication and mention of the grant of the patent: **06.10.2021**
(21) Application number: 18712655.2
(22) Date of filing: 27.02.2018
(51) Int. Cl.: B23D 21/02, B23D 35/00, B26D 5/02, B65H 75/24, B26D 7/26, B65H 75/26, B65H 75/22, B65H 75/14, B26D 1/24

(54) **SEPARATOR UNIT FOR CUTTING LAMINAR MATERIAL INTO STRIPS**
TRENNEINHEIT ZUM SCHNEIDEN VON LAMINARMATERIAL IN STREIFEN
UNITÉ SÉPARATRICE POUR DÉCOUPER UN MATÉRIAU STRATIFIÉ EN BANDES

(30) Priority: 27.02.2017 IT 201700021733
(43) Date of publication of application: 01.01.2020
(73) Proprietor: KEMA S.R.L. - In Liquidazione, 36040 Brendola (VI) (IT)
(72) Inventor: PILOT, Andrea, 36100 Vicenza (IT)
(74) Representative: Marchioro, Paolo
(86) International application number: PCT/IB2018/051238
(87) International publication number: WO 2018/154541

(56) References cited:
- FR-A- 1 441 546
- US-A- 3 302 506
- US-A- 4 237 761
- US-A- 5 803 399
- US-A1- 2004 195 428

## Description

The present invention relates to a separator unit according to the preamble of claim 1. Such units are particularly suitable for being used in cutting lines of laminar materials into strips, wound on bobbins, in particular of sheets of different thicknesses, widths and lengths.

The invention also relates to the cutting line comprising one or more of the aforesaid separator units.

US 4,237,761 A discloses an example of a separator unit according to the preamble of claim 1.

It is known that cutting lines allow obtaining strips of specific widths starting from a laminar material of greater width. In particular, to obtain such strips, it is known that the cutting lines provide shears comprising a pair of rotating shafts with parallel overlapping axes, between which the aforesaid laminar material is caused to pass.

More specifically, passing through such rotating shafts, the laminar material is cut into strips by annular blades and counter-blades mounted along the shafts by superimposing the cutting wire.

Downstream of such shears therefore is a plurality of strips which are to be simultaneously wound onto one or more winding bobbins arranged at the end of the cutting line.

To ensure that the plurality of such strips is wound adequately and simultaneously onto the aforesaid winding bobbins, the need is known to interpose some guide devices capable of allowing the sliding - to the greatest extent possible, the parallel sliding - of the strips along the cutting line, between the shears and the winding bobbins.

In particular, there are provided one or more separator units between the aforesaid notoriously used guide devices, the separator units comprising a rotating or non-rotating shaft on which separator tools, preferably discs having limited thickness, are positioned opportunely spaced apart from one another. More specifically, each pair of such adjacent separator tools is arranged at a mutual distance that substantially is equal to the width of the strip that is to pass through it so as to prevent the lateral movement thereof and therefore ensure the parallel sliding of the aforesaid plurality of strips up to the winding bobbins.

Obviously, the mutual distance of each pair of separator tools varies according to the width of the strip that is to pass through them.

Therefore, it is known that the aforesaid separator tools are not fixedly coupled to the shaft, rather are susceptible to being axially translated along the shaft and once arranged at a predefined position, they are susceptible to being locked on it.

It is also known that a first type of separator units provides for the arrangement of the aforesaid separator tools along the shaft to be manually executed.

It is apparent that such manual arrangement disadvantageously requires an increased quantity of time to be executed. Moreover, a further drawback due to the aforesaid manual method consists of the increased possibility of positioning the separator tools in an inaccurate manner.

Alternatively, more evolved separator units are known that provide an automatic system for arranging the aforesaid separator tools along the shaft. In particular, there are known translation means arranged side-by-side the shaft and capable of being moved along a sliding axis parallel to the axis of the shaft. Such translation means are capable of hooking one or more of the separator tools from a storage magazine, usually operatively associated with an end of the shaft, and translating the tools along the latter at a preset position.

However, such solution of the prior art has the drawback that the volume occupied by the separator unit is greater than the manual type separator units, due precisely to the presence of the aforesaid translation means in addition to the shaft.

A further solution of the prior art provides for the aforesaid translation means to be integrated in the shaft and to comprise a retractable punch susceptible to axially translating along the shaft.

In particular, the retractable punch is caused to come out of the outer surface of the shaft at a separator tool in the magazine so as to hook the tool provided with a suitable housing and translate it along the shaft up to reaching its predefined position. Once arranged at such position, the punch is retracted so as to disassociate it from the housing of the tool, ready to hook a further tool.

To avoid the separator tools from inclining with respect to the position orthogonal to the axis of the shaft during translation and accordingly jamming on it, the tools have, at least at the sliding ring nut, a sufficient width to prevent any movement thereof other than the axial translation movement.

However, the aforesaid solution causes the drawback of the minimum distance for arranging two adjacent separator tools being limited by the width of the aforesaid ring nuts.

Thus, such separator tools, and accordingly the separator units comprising them, disadvantageously are not suitable for being used to guide strips having smaller sizes than the aforesaid minimum distance between two adjacent separator tools.

The use of expandable shafts is known with regard to the means and method for locking the aforesaid separator tools on the shaft.

In particular, such expandable shafts comprise expandable means arranged in substantially longitudinal direction, possibly in specific longitudinal housings in the shaft, the expandable means preferably comprising longitudinal strips with a vulcanized rubber finishing defined on the surface thereof facing outwards, and air chambers arranged between the strips and the shaft. Such expandable means are therefore susceptible to varying their volume by blowing a fluid, preferably a gas, even more preferably air, into the aforesaid air chambers.

For such purpose, the air chambers with substantially longitudinal development in most cases are operatively communicating with a pneumatic source configured to fill the air chambers and, alternatively, to allow the emptying thereof.

In other words, when the separator tools are positioned in the corresponding predefined positions, such expandable means are expanded based on the production specifications and accordingly the separator tools are locked on the shaft.

However, such locking means and the relative method are not capable of ensuring an optimal locking, especially in axial direction, of the aforesaid separator tools on the shaft when the latter are subjected to a lateral thrust greater than a given value.

Such situation essentially occurs when the strips passing through the separator unit have a given thickness and knocking laterally against the separator tools, impress on the latter such thrust which is greater than the aforesaid value.

Accordingly, this disadvantageously causes an undesired modification of the arrangement of the separator unit with a subsequent worsening of the guiding conditions of the strips through the separator unit.

The present invention intends overcoming all the drawbacks mentioned.

In particular, it is the object of the invention to make a separator unit which, once provided, is capable of ensuring increased stability of its composition with respect to the separator units of the prior art.

In greater detail, it is the object of the invention to make a separator unit capable of improving locking the separator tools on the expandable shaft.

It is a further object of the invention to make a separator unit capable of keeping the aforesaid separator tools in an optimal position during the arrangement of the latter on the expandable shaft.

Furthermore, it is the object of the invention to make a separator unit which allows facilitating the step of arranging separator tools on the expandable shaft.

Again, it is the object of the invention to make a separator unit having reduced sizes with respect to certain types of separator units of the prior art.

These objects are achieved by making a separator unit according to the main claim.

Further features of the separator unit of the invention are described in the dependent claims.

The aforesaid objects are also achieved by the cutting line comprising one or more of the aforesaid separator units of the invention according to claim 11.

The aforesaid objects, together with the advantages described below, will be noted during the description of a preferred implementation embodiment of the invention, which is given by way of a non-limiting indicative example, with reference to the accompanying drawings, where:

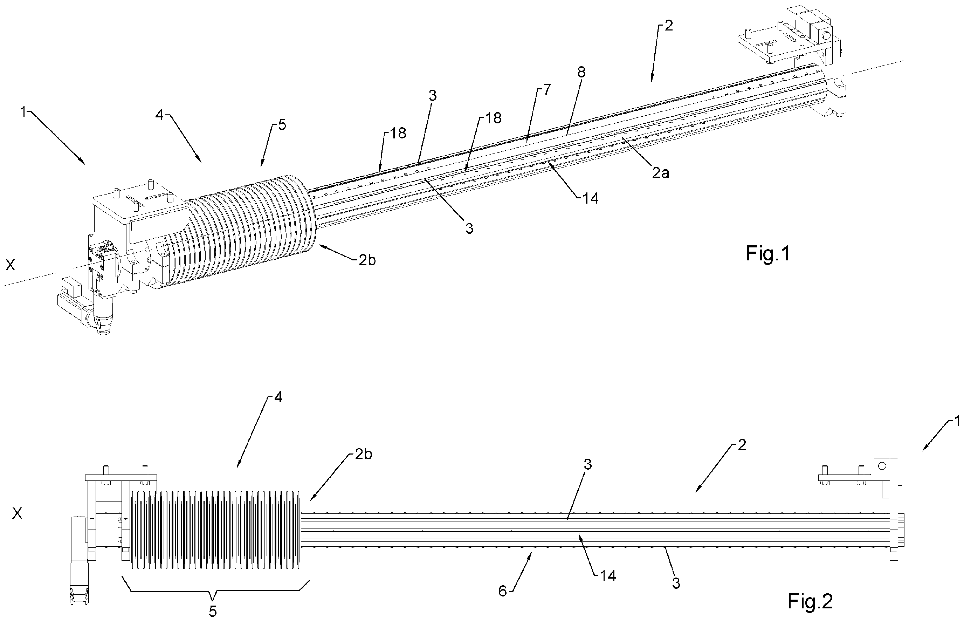

- fig. 1 shows an axonometric view of the separator unit of the invention, with the separator tools located in the storage magazine;
- fig. 2 shows the top view of the separator unit of the invention, with the separator tools located in the storage magazine;

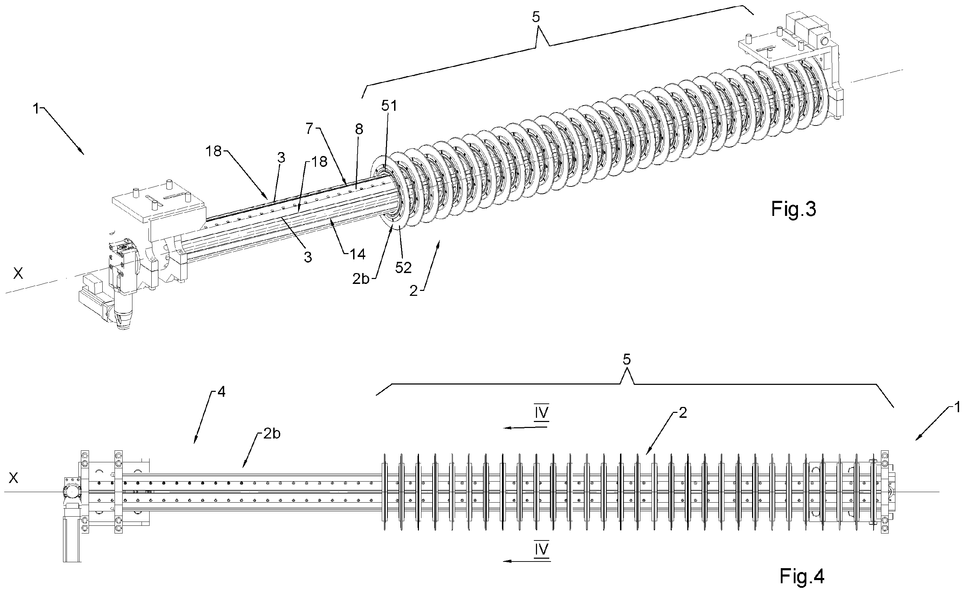

- fig. 3 shows an axonometric view of the separator unit of the invention, with the separator tools located along the expandable shaft;

- fig. 4 shows the top view of the separator unit of the invention, with the separator tools located along the expandable shaft;
- fig. 5 shows a cross-section view, along the section line IV-IV of fig. 4, of the coupling of the same expandable shaft with a separator tool;
- figures 6a and 6b show a cross-section view, along the section lines V'-V' and V"-V" of fig. 5, of the detail of the knurled locking element and of the counter-knurled ring respectively in the uncoupled configuration and coupled configuration;
- fig. 7 shows a sectioned axonometric view of the translation means belonging to the separator unit of the invention according to a section plane on which the longitudinal axis X of the expandable shaft lies;
- fig. 8 shows an axonometric view of the retractable punch belonging to the translation means of fig. 7, according to the preferred implementation embodiment of the invention;
- fig. 9 diagrammatically shows a cutting line comprising the separator unit of the invention.

The separator unit of the invention, which is suitable for being used in a cutting line of laminar materials into strips, is depicted as a whole in figures from 1 to 4, where it is indicated as a whole with 1.

As is shown in the figures, the separator unit 1 comprises an expandable shaft 2, preferably cylindrical in shape, preferably provided with a plurality of expandable means 3 arranged in substantially longitudinal direction along the expandable shaft 2.

As described in the introduction of the prior art, such expandable means 3 known in themselves preferably comprise longitudinal strips with a vulcanized rubber finishing defined on the surface thereof facing outwards, and air chambers arranged between the strips and the shaft 2. Such air chambers preferably are operatively connected to a pneumatic source (not shown in the figures) capable of filling the air chambers with a gas, preferably with air. Thereby, as is known, the expandable means 3 expand, accordingly increasing the diameter of the expandable shaft 2 and locking the separator tools 5 arranged previously along the expandable shaft 2, in predefined positions. Obviously, such pneumatic source is also configured to allow the emptying of the gas inside the air chambers of the expandable means 3 in expanded configuration when there is a need to extract the separator tools 5 from the expandable shaft 2 or there is a need to modify their arrangement on the shaft 2.

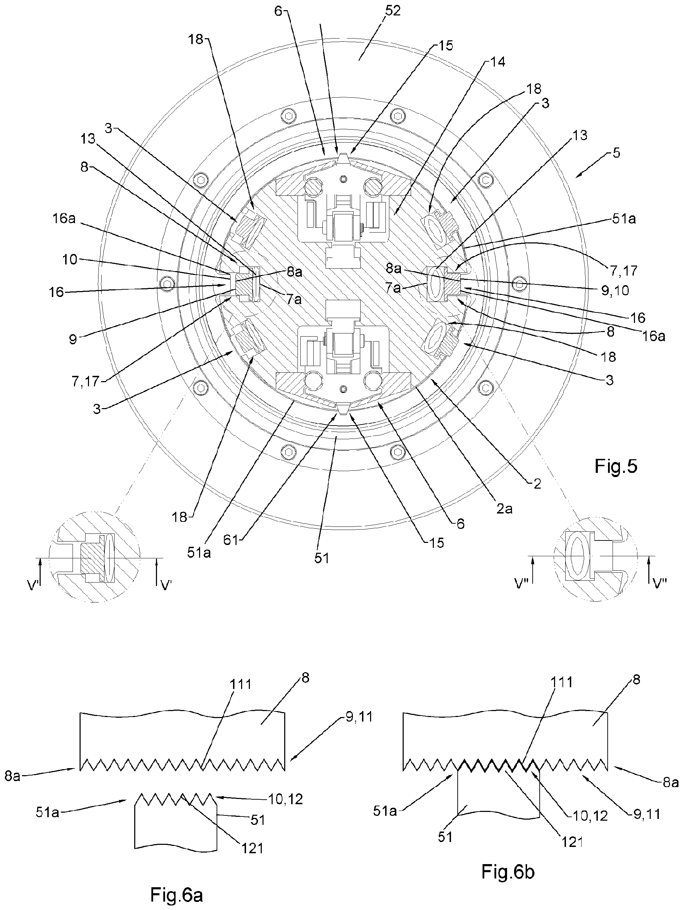

According to implementation variants of the invention, the expandable means 3 alternatively could be operatively connected to a hydraulic source, of the type in itself known, so long as it is capable of expanding the expandable means 3. Furthermore, according to different implementation embodiments of the invention, the aforesaid expandable means 3 could be of the mechanical type. Preferably, such expandable means 3 are arranged along the expandable shaft in specific longitudinal housings 18 which are lowered with respect to the outer surface 2a of the expandable shaft 2, as shown in fig. 5.

However, it is not excluded for such expandable means 3 to be arranged on the outer surface 2a of the expandable shaft 2 without defining the aforesaid longitudinal housings 18, so long as they allow translating the separator tools 5 on the expandable shaft 2 when they are in their non-expanded configuration and they also prevent the movement of the separator tools 5 when they are in expanded configuration.

Preferably, the expandable shaft 2 is an expandable shaft of the fixed type. According to an alternative implementation embodiment, it is not excluded for the expandable shaft 2 to be rotating.

As shown in the aforesaid figures from 1 to 4, the separator unit 1 of the invention also comprises a storage magazine 4 for storing the aforesaid separator tools 5. For such object, the storage magazine 4 is operatively associated with an end 2b of the expandable shaft 2. Preferably, it is defined and shaped like an extension of the aforesaid expandable shaft 2 at the aforesaid end 2b of the latter.

The separator unit 1 of the invention obviously also comprises a plurality of the aforesaid separator tools 5, each of which is provided with a disc 52, preferably annular in shape, of limited thickness, with which a ring **51**, preferably an annular ring, is centrally and axially associated, which is configured to allow the translation of the separator tool 5 from the storage magazine 4 to the expandable shaft 2 in a predefined position, and vice versa. Such translation can clearly be implemented when the expandable shaft 2 is in non-expanded configuration.

According to the preferred implementation embodiment herein described which provides a fixed expandable shaft **2,** the annular disc **52** of each separator tool **5** is connected to the relative annular ring **51** by means of a mechanical bearing so that the annular disc **52** can rotate relative to the expandable shaft **2** in operating step.

Alternatively, if the expandable shaft **2** is of the rotating type, the annular disc **52** of each separator tool **5** is fixedly associated with the relative annular ring **51** so that the rotation of the expandable shaft **2** results in the rotation of the annular disc **52.**

Furthermore, as is described in detail below, the separator unit **1** of the invention comprises translation means **4** configured to operate the aforesaid translation of the separator tools **5.**

According to the invention, as shown in fig. 5, the expandable shaft **2** is provided with at least a first slit **7,** preferably with two first slits **7** made in longitudinal direction along the same expandable shaft **2** and in diametrically opposed position between them. Each of the aforesaid first slits **7** is configured to house a locking element **8** having substantially longitudinal development and which has a knurling **9** on its outwards facing surface **8a.**

According to the invention, such locking element **8** is susceptible to translating in radial direction with respect to the longitudinal axis **X** of the expandable shaft **2.**

In particular, such radial translation preferably is actuated by interposing an expandable element **13,** even more preferably an air chamber operatively communicating with the aforesaid pneumatic source or with a different pneumatic source with respect to the one of the expandable means **3,** between the bottom **7a** of each of the aforesaid first slits **7** and the relative locking element **8.**

According to different implementation embodiments of the invention, it is not excluded for such expandable element **13** to be of other type, for example mechanical, so long as it is capable of radially translating the locking element **8.**

According to implementation variants of the invention, the number of the aforesaid first slits **7** and of the relative locking elements 8 may be less or greater than two.

Symmetrically, according to the invention, the rings **51** of the aforesaid separator tools **5** have a counter-knurling **10** at one or more lengths, preferably at two lengths defined diametrically opposed to each other, of their surface 51a facing the expandable shaft **2.**

The invention provides for the knurling **9** made on each of the two locking elements **8** to be configured to fixedly couple with one of the two counter-knurlings **10** made on the aforesaid surface **51a** of each of the rings **51** of the separator tools 5 when the surfaces **8a** of the locking elements 8 are placed in contact with the relative surfaces **51a** of the rings **51,** as schematically depicted in fig. 6b.

Obviously, according to the implementation variants of the invention which provide a different number of locking elements **8** with respect to the one of the preferred implementation embodiment, there must be provided the same number of lengths with such counter-knurling **10** made on the aforesaid surfaces **51a** of the rings **51** and adapted to allow the aforesaid coupling with the relative knurlings **9.**

However, it is not excluded for the aforesaid counter-knurling **10** to be made along the whole surface **51a.**

Advantageously, the coupling between each knurling **9** and a relative counter-knurling **10** allows ensuring an optimal locking between the expandable shaft **2** and the separator tools **5** arranged on the shaft **2** when it is in expanded configuration.

With regard to the knurling **9** and the counter-knurling **10,** as depicted in figures 6a and 6b, they preferably comprise respectively a toothing **11** and a counter-toothing **12** that are complementary to each other.

Even more preferably, the teeth **111** and **121** of the aforesaid toothing **11** and of the aforesaid counter-toothing **12** are defined in sequence according to a parallel direction with respect to the longitudinal axis **X** of the expandable shaft **2,** as shown in figures 6a and 6b.

Advantageously, such particular configuration allows improving the axial locking between each separator tool **5** and the expandable shaft **2.** Alternatively, according to a different implementation embodiment of the invention, the teeth **111** and **121** of the toothing **11** and of the counter-toothing **12** are defined in sequence according to an orthogonal direction with respect to the longitudinal axis **X** of the expandable shaft **2.**

Advantageously, here the coupling between toothing **11** and counter-toothing **12** improves the rotational locking between each separator **tool 5** and the aforesaid expandable shaft **2.**

It is not excluded for different implementation embodiments of the invention to provide a knurling **9** and a counter-knurling **10** of different type with respect to the toothing **11** and the counter-toothing **12,** so long as their coupling allows fixedly locking each separator tool **5** to the expandable shaft **2.**

For example, such knurling **9** and counter-knurling **10** could be made in the shape of side-by-side diamond tips.

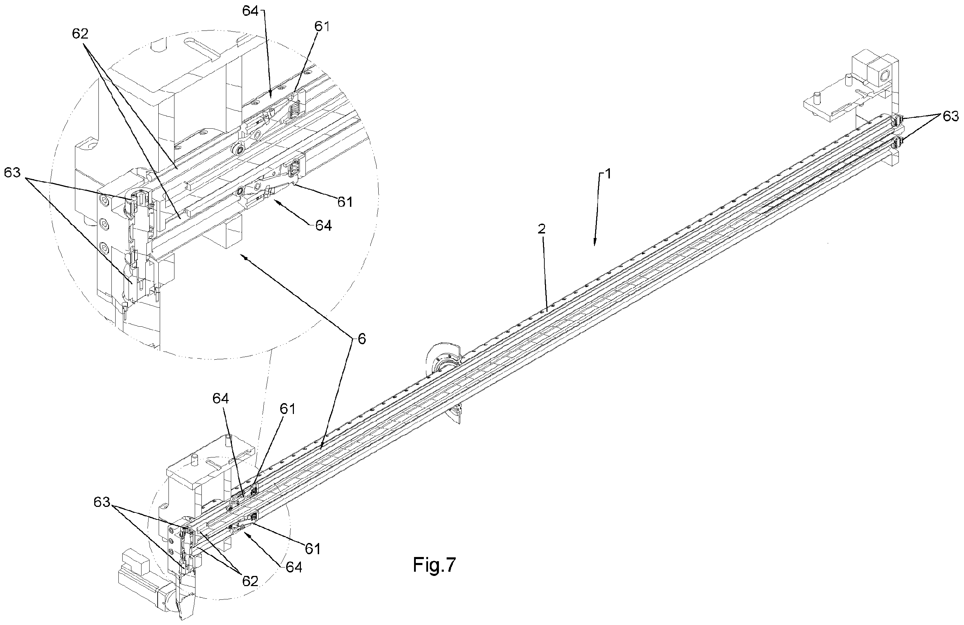

With regard to the aforesaid translation means **6,** as shown in fig. **7****,** they preferably are made integrated in the expandable shaft **2**. In particular, such translation means **6** comprise at least one retractable punch **61**, preferably two retractable punches **61**, arranged in diametrically opposed positions from each other on the expandable shaft **2.** Such retractable punches **61** are susceptible to being translated in radial direction from a first position, according to which they are at least partially exposed with respect to the outer surface **2a** of the expandable shaft **2,** to a second position, according to which the retractable punches **61** are completely retracted with respect to the aforesaid outer surface **2a**. Obviously, such translation must occur also in opposite direction. Furthermore, according to the invention, the retractable punches **61** are susceptible to translating axially along the expandable shaft **2** through two second slits **14** defined along the expandable shaft **2** and along the storage magazine **4**, so as to allow the picking of a separator tool **5** from the storage magazine **4** and its positioning along the expandable shaft **2**, as shown in detail below.

In detail, preferably, such axial translation of each of the two retractable punches **61** is implemented with a belt **62** and pulley **63** transmission system inserted in the expandable shaft **2,** as shown in fig. 7. Even more accurately, each of the aforesaid retractable punches **61** is operatively associated with a mechanical slide **64** fixed in a point of the aforesaid belt **62.**

With regard to the radial translation of the retractable punch **61**, it is implemented by means of mechanical connection members - in themselves known - between the retractable punch **61** and the relative slide **64.**

According to implementation variants, it is not excluded for the number of retractable punches **61** on the expandable shaft **2** to be other than two, to be arranged in different positions from the ones described above, or for the axial and radial translation system of the retractable punches **61** to be of alternative type with respect to the one of the preferred implementation embodiment, so long as capable of operating such translations.

Jointly to the presence of the aforesaid retractable punches **61,** the separator unit 1 of the invention provides for the annular rings **51** of the separator tools **5** to have, on their surfaces **51a**, at least one housing **15**, preferably two housings **15** made in diametrically opposed positions from each other, which are configured to house the retractable punches **61** in their first position. Obviously, the number and the position of the housings **15** defined on the rings **51** of the separator tools **5** must correspond with the number and positions of the retractable punches **61** located on the expandable shaft **2.** However, it is not excluded that there may alternatively be provided a single housing **15** that extends for the whole surface **51a** of the annular rings **51**.

As mentioned above, the aforesaid translation means **6** are configured to axially translate the retractable punches **61** at one of the separator tools **5,** position the retractable punches **61** in their first position, thus coupling with the housings **15** of the ring **51** of the aforesaid separator tool **5,** and translate the retractable punches **61** jointly with the separator tool **5** from the storage magazine **4** to a predefined position on the expandable shaft **2.** Clearly, the translation means **6** are configured to also execute the inverse translation operation.

Preferably, both the free end **61a** of each retractable punch **61** and the housings **15** are shaped in the form of a frusto pyramid with radial axis of development with respect to the expandable shaft **2**, and are complementary to each other.

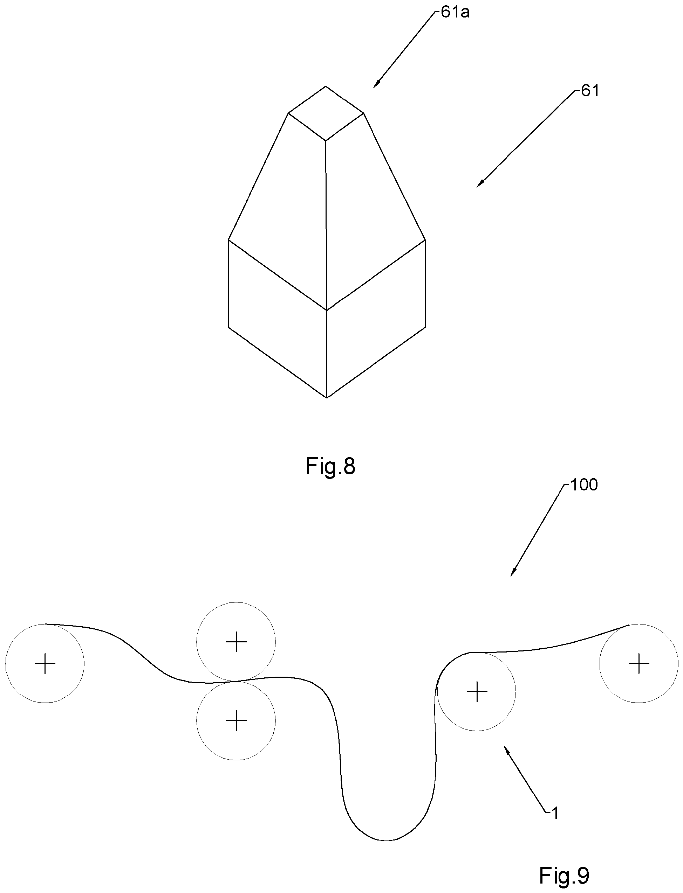

A depiction of the aforesaid configuration is shown in fig. 8 with regard to the retractable punch **61.**

Advantageously, such characteristic allows achieving the two advantages disclosed below.

Mainly, the aforesaid shaping of the retractable punches **61** and of the housings **15**, jointly with the fact that the two retractable punches **61** are defined in diametrically opposed positions from each other, allows the raising and moving away of the separator tool **5** from the expandable shaft **2** in the release step of the retractable punches **61** and the coupling step thereof with the housings **15.**

Advantageously, this reduces or even eliminates the possibility of contact, and therefore of friction, between the two during the translation step of the separator tool 5 on the expandable shaft 2.

Secondly, the frusto-pyramidal form of the retractable punches 61 and of the corresponding housings 15 allows ensuring the perfectly orthogonal positioning of the separator tools 5 with respect to the expandable shaft 2 because the coupling between the corresponding surfaces of the frusto pyramids of the retractable punches 61 and of the relative housings 15 acts as centring system.

However, it is not excluded, according to different implementation embodiments of the invention, for the retractable punches 61, and obviously the housings 15, to have different shapes.

For example, according to one implementation variant of the invention, the free end 61a of the retractable punches 61 and the housings 15 could be shaped like a truncated cone with radial axis of development with respect to the expandable shaft 2. Such implementation embodiment allows achieving the aforesaid first advantage, but not also the second.

Incidentally, it is important to note that the solution providing the combination of the retractable punches 61 and the relative housings 15 with the frusto-pyramidal or truncated-conical end proposed above could in itself be the object of claim without the need for such solution to be implemented in a separator unit 1 according to the preferred implementation embodiment of the invention or according to the alternative implementation embodiments described above. Indeed, such last combination of characteristics in itself allows the advantages disclosed above to be achieved.

Preferably, the separator unit 1 of the invention provides for the rings **51** to comprise at least one centring element 16, preferably two centring elements 16 radially protruding from their surface 51a facing the expandable shaft 2. The two centring elements 16 preferably are defined in diametrically opposed positions from each other.

Symmetrically, also the expandable shaft **2** comprises at least a third slit **17**, preferably two third slits **17** defined in diametrically opposed positions from each other, having substantially longitudinal development, which are suitable for housing such centring element **16** so as to advantageously prevent the rotation of the separator tools **5** with respect to the expandable shaft **2**.

According to the preferred implementation embodiment herein described and depicted in fig. 5, the aforesaid third slits **17** correspond to the aforesaid first slits **7** in which there is arranged the locking element **8** and accordingly the counter-knurling **10** of the rings **51** is defined on the surface **16a** facing the expandable shaft **2** of the aforesaid centring elements **16.**

Such configuration of the invention allows conveying more functionality to the structural elements.

However, it is not excluded for such third slits **17** and such centring elements **16** to be made respectively on the expandable shaft **2** and on the rings **51** in separate angular positions from the aforesaid first slits **7**/locking elements 8 and relative lengths in which the aforesaid counter-knurling **10** is obtained. Furthermore, according to an alternative implementation embodiment of the invention, it is not excluded for there not to be such centring elements 16 and the relative slits **17.**

Incidentally, it is important to note that the solution providing the combination of the centring elements **16** and the third slits **17** proposed above could in itself be the object of claim without the need for such solution to be implemented in a separator unit 1 according to the preferred implementation embodiment of the invention or according to the alternative implementation embodiments described above. Indeed, such last combination of characteristics in itself allows the advantages disclosed above to be achieved.

As mentioned above, also the cutting line 100 of the laminar materials into strips, wound on bobbins, in particular of sheets of different thicknesses, widths and lengths, schematically depicted in fig. 9, is part of the invention.

According to the invention, such cutting line 100 comprises one or more separator units 1 which characteristics were described above.

The invention results in a method of arranging and locking a plurality of separator tools 5 along an expandable shaft 2 belonging to the separator unit 1 of the invention. In particular, such a method can provide axially translating the retractable punches **61** at one of the separator tools **5** located in the storage magazine **4.**

Obviously, such axial translation must occur when the retractable punch **61** is arranged in its aforesaid retracted second position.

Then the method can provide extracting the retractable punches **61** from the expandable shaft **2** so as to obtain the coupling with the housings **15** of the rings **51** of the aforesaid separator tool **5.** The method then can provide for translating the retractable punches **61** jointly with the separator tool **5** along the expandable shaft **2** at a predefined position. The separator tool **5** being located in such predefined position, the retractable punches **61** are retracted and the aforesaid steps are possibly repeated for further one or more separator tools **5.**

When all the separator tools **5** are arranged in the corresponding predefined positions, the method provides expanding the expandable means **3** and the expandable elements **13** so that the first ones come in contact directly with the surface **51a** of the aforesaid rings **51**, while the second ones allow the locking elements **8** to radially translate outwards up to reaching the stable coupling between the toothings **11** and the relative counter-toothings **12**. It is not excluded for the method to provide the expansion of the expandable elements **13** alone. Due to that mentioned hereto, it is understood that the separator unit described above achieves the preset objects.

In particular, the object is achieved of making a separator unit which, once provided, is capable of ensuring increased stability of its composition with respect to the separator units of the prior art.

In greater detail, the object of the invention of making a separator unit capable of improving locking the separator tools on the expandable shaft is achieved. Furthermore, the object is achieved of making a separator unit capable of keeping the aforesaid separator tools in an optimal position during the arrangement of the latter on the expandable shaft.

Likewise, the object is achieved of making a separator unit which allows facilitating the step of arranging separator tools on the expandable shaft. Finally, the object is achieved of making a separator unit having reduced sizes with respect to certain types of separator units of the prior art.

## Claims

1. A separator unit (1) suitable for being used in a cutting line (100) of laminar materials into strips, of the type comprising:
- an expandable shaft (2) preferably provided with one or more expandable means (3) arranged in substantially longitudinal direction along said expandable shaft (2);
- a storage magazine (4) for storing separator tools (5), which is operatively associated with an end (2b) of said expandable shaft (2);
- said separator tools (5) being provided with rings (51) configured to allow the translation of said separator tools (5) from said storage magazine (4) to said expandable shaft (2) in predefined positions, and vice versa when said expandable shaft (2) is in non-expanded configuration, said separator tools (5) also being susceptible to being locked in said predefined positions when said expandable shaft (2) is in expanded configuration;
- translation means (6) configured to translate said separator tools (5) from said storage magazine (4) to said expandable shaft (2), and vice versa;
- said expandable shaft (2) being provided with at least a first slit (7) made in longitudinal direction, said first slit (7) housing a locking element (8) with substantially longitudinal development, said locking element (8) having a knurling (9) on its outwards facing surface (8a) and being susceptible to translating in radial direction with respect to the longitudinal axis (X) of said expandable shaft (2);
**characterized in that**
- said rings (51) have a counter-knurling (10) on one or more lengths of their surfaces (51a) facing said expandable shaft (2);
said knurling (9) and said counter-knurling (10) being configured to fixedly couple when said surface (8a) of said locking element (8) is placed in contact with said surfaces (51a) of said rings (51).

2. A separator unit (1) according to claim 1, **characterized in that** said knurling (9) and said counter-knurling (10) comprise respectively a toothing (11) and a counter-toothing (12) which are complementary to each other.

3. A separator unit (1) according to claim 2, **characterized in that** the teeth (111, 121) of said toothing (11) and of said counter-toothing (12) are defined in sequence according to a parallel direction with respect to said longitudinal axis (X) of said expandable shaft (2).

4. A separator unit (1) according to claim 2, **characterized in that** the teeth (111, 121) of said toothing (11) and of said counter-toothing (12) are defined in sequence according to an orthogonal direction with respect to said longitudinal axis (X) of said expandable shaft (2).

5. A separator unit (1) according to any one of the preceding claims, **characterized in that** it provides an expandable element (13) interposed between the bottom (7a) of said first slit (7) and said locking element (8), said expandable element (13) being configured to translate said locking element (8) according to said radial direction.

6. A separator unit (1) according to any one of the preceding claims, **characterized in that** said expandable shaft (2) provides two of said first slits (7) defined in diametrically opposed positions, each of said first slits (7) housing said locking element (8).

7. A separator unit (1) according to any one of the preceding claims, **characterized in that:**
- said translation means (6) are integrated in said expandable shaft (2), said translation means (6) comprising at least one retractable punch (61) susceptible to being translated in radial direction from a first position according to which said retractable punch (61) is at least partially exposed with respect to the outer surface (2a) of said expandable shaft (2) to a second position according to which said retractable punch is completely retracted with respect to said outer surface (2a) of said expandable shaft (2), and vice versa, said retractable punch (61) also being susceptible to translating axially along said expandable shaft (2) through a second slit (14) made in said expandable shaft (2) and along said storage magazine (4);
- said rings (51) have, on their surfaces (51a) facing said expandable shaft (2), at least one housing (15) configured to house said retractable punch (61) in said first position;
said translation means (6) being configured to axially translate said retractable punch (61) at one of said separator tools (5), to position said retractable punch (61) in said first position to couple with one of said housings (15) of said ring (51) of said separator tool (5) and to translate said retractable punch (61) jointly with said separator tool (5) from said storage magazine (4) to a predefined position on said expandable shaft (2), and vice versa.

8. A separator unit (1) according to claim 7, **characterized in that** said translation means (6) comprise two retractable punches (61) arranged at two second slits (14) defined in said expandable shaft (2) in diametrically opposed positions.

9. A separator unit (1) according to either of claims 7 or 8, **characterized in that** the free end (61a) of said at least one retractable punch (61) and said housings (15) are shaped in the form of a frusto pyramid with radial axis of development with respect to said expandable shaft (2).

10. A separator unit (1) according to any one of the preceding claims, **characterized in that:**
- said rings (51) have at least one centring element (16) radially projecting from said surface (51a) facing said expandable shaft (2);
- said expandable shaft (2) has at least a third slit (17) with substantially longitudinal development adapted to house said centring element (16) so as to prevent the rotation of said separator tools (5) with respect to said expandable shaft (2).

11. A cutting line (100) of laminar materials into strips, wound on bobbins, in particular of sheets of different thicknesses, widths and lengths, **characterized in that** it comprises one or more separator units (1) according to any one of the preceding claims.

## Patentansprüche

1. Trenneinheit (1), die zur Verwendung in einer Linie (100) zum Schneiden von Laminarmaterialien in Streifen geeignet ist, des Typs, umfassend:
- eine expandierbare Welle (2), die vorzugsweise mit einem oder mehreren expandierbaren Mitteln (3) versehen ist, die im Wesentlichen in Längsrichtung entlang der expandierbaren Welle (2) angeordnet sind;
- ein Speichermagazin (4) zum Speichern von Trennwerkzeugen (5), das betriebsmäßig mit einem Ende (2b) der expandierbaren Welle (2) verbunden ist;
- wobei die mit Ringen (51) versehenen Trennwerkzeuge (5) dazu konfiguriert sind, die Verlagerung der Trennwerkzeuge (5) vom Speichermagazin (4) auf die expandierbare Welle (2) in vordefinierten Positionen und umgekehrt zu erlauben, wenn die expandierbare Welle (2) eine nicht expandierte Konfiguration aufweist; die Trennwerkzeuge (5) auch in den vordefinierten Positionen verriegelt werden können, wenn die expandierbare Welle (2) eine expandierte Konfiguration aufweist;
- Verlagerungsmittel (6), die dazu konfiguriert sind, die Trennwerkzeuge (5) vom Speichermagazin (4) auf die expandierbare Welle (2) und umgekehrt zu verlagern;
- wobei die expandierbare Welle (2) mit mindestens einem ersten Schlitz (7) versehen ist, der in Längsrichtung hergestellt ist; der erste Schlitz (7) ein Verriegelungselement (8) mit im Wesentlichen länglichem Verlauf aufnimmt; das Verriegelungselement (8) eine Rändelung (9) an seiner nach außen gerichteten Oberfläche (8a) aufweist und in radialer Richtung in Bezug auf die Längsachse (X) der expandierbaren Welle (2) verlagert werden kann;
**dadurch gekennzeichnet, dass**
- die Ringe (51) eine Gegenrändelung (10) auf einer oder mehreren Längen ihrer der expandierbaren Welle (2) zugewandten Oberflächen (51a) aufweisen;
wobei die Rändelung (9) und die Gegenrändelung (10) zum festen Koppeln konfiguriert sind, wenn die Oberfläche (8a) des Verriegelungselements (8) mit den Oberflächen (51a) der Ringe (51) in Kontakt gebracht wird.

2. Trenneinheit (1) nach Anspruch 1, **dadurch gekennzeichnet, dass** die Rändelung (9) und die Gegenrändelung (10) jeweils eine Verzahnung (11) und eine Gegenverzahnung (12) aufweisen, die zueinander komplementär sind.

3. Trenneinheit (1) nach Anspruch 2, **dadurch gekennzeichnet, dass** die Zähne (111, 121) der Verzahnung (11) und der Gegenverzahnung (12) nacheinander entsprechend einer parallelen Richtung in Bezug auf die Längsachse (X) der expandierbaren Welle (2) definiert sind.

4. Trenneinheit (1) nach Anspruch 2, **dadurch gekennzeichnet, dass** die Zähne (111, 121) der Verzahnung (11) und der Gegenverzahnung (12) nacheinander entsprechend einer senkrechten Richtung in Bezug auf die Längsachse (X) der expandierbaren Welle (2) definiert sind.

5. Trenneinheit (1) nach irgendeinem der vorhergehenden Ansprüche, **dadurch gekennzeichnet, dass** sie ein expandierbares Element (13) bereitstellt, das zwischen dem Boden (7a) des ersten Schlitzes (7) und dem Verriegelungselement (8) angeordnet ist, wobei das expandierbare Element (13) dazu konfiguriert ist, das Verriegelungselement (8) entsprechend der radialen Richtung zu verlagern.

6. Trenneinheit (1) nach irgendeinem der vorhergehenden Ansprüche, **dadurch gekennzeichnet, dass** die expandierbare Welle (2) zwei der ersten Schlitze (7) bereitstellt, die in diametral entgegengesetzten Positionen definiert sind, wobei jeder der ersten Schlitze (7) das Verriegelungselement (8) aufnimmt.

7. Trenneinheit (1) nach irgendeinem der vorhergehenden Ansprüche, **dadurch gekennzeichnet, dass**:
- die Verlagerungsmittel (6) in der expandierbaren Welle (2) integriert sind; wobei die Verlagerungsmittel (6) mindestens einen einziehbaren Stempel (61) umfassen, der in radialer Richtung von einer ersten Position, in der der einziehbare Stempel (61) der Außenfläche (2a) der expandierbaren Welle (2) zumindest teilweise ausgesetzt ist, in eine zweite Position verlagert werden kann, in der der einziehbare Stempel in Bezug auf die Außenfläche (2a) der expandierbaren Welle (2) vollständig zurückgezogen ist, und umgekehrt; der einziehbare Stempel (61) sich auch entlang der expandierbaren Welle (2) durch einen zweiten Schlitz (14) axial verlagern kann, der in der expandierbaren Welle (2) und entlang des Speichermagazins (4) hergestellt ist;
- die Ringe (51) auf ihren der expandierbaren Welle (2) zugewandten Oberflächen (51a), mindestens ein Gehäuse (15) aufweisen, das dazu konfiguriert ist, den einziehbaren Stempel (61) in der ersten Position aufzunehmen;
wobei die Verlagerungsmittel (6) dazu konfiguriert sind, den einziehbaren Stempel (61) an einem der Trennwerkzeuge (5) axial zu verlagern, um den einziehbaren Stempel (61) in der ersten Position zu positionieren, um ihn mit einem der Gehäuse (15) des Ringes (51) des Trennwerkzeugs (5) zu koppeln und, um den einziehbaren Stempel (61) gemeinsam mit dem Trennwerkzeug (5) von dem Speichermagazin (4) in eine vordefinierte Position auf der expandierbaren Welle (2) zu verlagern, und umgekehrt.

8. Trenneinheit (1) nach Anspruch 7, **dadurch gekennzeichnet, dass** die Verlagerungsmittel (6) zwei einziehbare Stempel (61) umfassen, die an zwei zweiten Schlitzen (14) angeordnet sind, die in der expandierbaren Welle (2) in diametral gegenüberliegenden Positionen definiert sind.

9. Trenneinheit (1) nach einem der Ansprüche 7 oder 8, **dadurch gekennzeichnet, dass** das freie Ende (61a) des mindestens einen einziehbaren Stempels (61) und die Gehäuse (15) in Form einer Kegelstumpfpyramide mit radialer Entwicklungsachse in Bezug auf die expandierbare Welle (2) geformt sind.

10. Trenneinheit (1) nach irgendeinem der vorhergehenden Ansprüche, **dadurch gekennzeichnet, dass**:
- die Ringe (51) mindestens ein Zentrierelement (16) aufweisen, das radial von der Oberfläche (51a) vorsteht, die der expandierbaren Welle (2) zugewandt ist;
- die expandierbare Welle (2) mindestens einen dritten Schlitz (17) mit im Wesentlichen länglichem Verlauf aufweist, der zur Aufnahme des Zentrierelements (16) angepasst ist, um die Drehung der Trennwerkzeuge (5) in Bezug auf die expandierbare Welle (2) zu verhindern.

11. Schnittlinie (100) zum Schneiden von Laminarmaterialien in Streifen, die auf Spulen gewickelt werden, insbesondere von Blechen unterschiedlicher Dicke, Breite und Länge, **dadurch gekennzeichnet, dass** sie eine oder mehrere Trenneinheiten (1) nach irgendeinem der vorhergehenden Ansprüche umfasst.

## Revendications

1. Unité de séparation (1) adaptée pour être utilisée dans une ligne de coupe (100) de matériaux laminaires en bandes, du type comprenant:
- un arbre expansible (2) de préférence fourni avec un ou plusieurs moyens expansibles (3) disposés dans une direction sensiblement longitudinale le long dudit arbre expansible (2);
- un magasin de stockage (4) pour stocker des outils de séparation (5), qui est associé opérationnellement à une extrémité (2b) dudit arbre expansible (2);
- lesdits outils de séparation (5) étant fournis avec des anneaux (51) configurés pour permettre la translation desdits outils de séparation (5) dudit magasin de stockage (4) audit arbre expansible (2) dans des positions prédéfinies, et vice versa lorsque ledit arbre expansible (2) est dans une configuration non expansée, lesdits outils de séparation (5) étant également susceptibles d'être verrouillés dans lesdites positions prédéfinies lorsque ledit arbre expansible (2) est dans une configuration expansée;
- des moyens de translation (6) configurés pour translater lesdits outils de séparation (5) dudit magasin de stockage (4) audit arbre expansible (2), et vice versa;
- ledit arbre expansible (2) étant fourni avec au moins une première fente (7) réalisée dans une direction longitudinale, ladite première fente (7) logeant un élément de verrouillage (8) avec un développement sensiblement longitudinal, ledit élément de verrouillage (8) ayant un moletage (9) sur sa surface (8a) tournée vers l'extérieur et étant susceptible de translater dans une direction radiale par rapport à l'axe longitudinal (X) dudit arbre expansible (2);
**caractérisée en ce que**
- lesdits anneaux (51) ont un contre-moletage (10) sur une ou plusieurs longueurs de leurs surfaces (51a) tournées vers ledit arbre expansible (2);
ledit moletage (9) et ledit contre-moletage (10) étant configurés pour se coupler de manière fixe lorsque ladite surface (8a) dudit élément de verrouillage (8) est mise en contact avec lesdites surfaces (51a) desdits anneaux (51).

2. Unité de séparation (1) selon la revendication 1, **caractérisée en ce que** ledit moletage (9) et ledit contre-moletage (10) comprennent respectivement une denture (11) et une contre-denture (12) qui sont complémentaires l'une à l'autre.

3. Unité de séparation (1) selon la revendication 2, **caractérisée en ce que** les dents (111, 121) de ladite denture (11) et de ladite contre-denture (12) sont définies en séquence selon une direction parallèle par rapport audit axe longitudinal (X) dudit arbre expansible (2).

4. Unité de séparation (1) selon la revendication 2, **caractérisée en ce que** les dents (111, 121) de ladite denture (11) et de ladite contre-denture (12) sont définies en séquence selon une direction orthogonale par rapport audit axe longitudinal (X) dudit arbre expansible (2).

5. Unité de séparation (1) selon l'une quelconque des revendications précédentes, **caractérisée en ce qu'**elle fournit un élément expansible (13) entreposé entre le fond (7a) de ladite première fente (7) et ledit élément de verrouillage (8), ledit élément expansible (13) étant configuré pour translater ledit élément de verrouillage (8) selon ladite direction radiale.

6. Unité de séparation (1) selon l'une quelconque des revendications précédentes, **caractérisée en ce que** ledit arbre expansible (2) fournit deux desdites premières fentes (7) définies dans des positions diamétralement opposées, chacune desdites premières fentes (7) logeant ledit élément de verrouillage (8).

7. Unité de séparation (1) selon l'une quelconque des revendications précédentes, **caractérisée en ce que**:
- lesdits moyens de translation (6) sont intégrés dans ledit arbre expansible (2), lesdits moyens de translation (6) comprenant au moins un poinçon rétractable (61) susceptible d'être translaté dans une direction radiale d'une première position selon laquelle ledit poinçon rétractable (61) est au moins partiellement exposé par rapport à la surface extérieure (2a) dudit arbre expansible (2) à une deuxième position selon laquelle ledit poinçon rétractable est complètement rétracté par rapport à ladite surface extérieure (2a) dudit arbre expansible (2), et vice versa, ledit poinçon rétractable (61) étant également susceptible de translater axialement le long dudit arbre expansible (2) à travers une deuxième fente (14) réalisée dans ledit arbre expansible (2) et le long dudit magasin de stockage (4);
- lesdits anneaux (51) ont, sur leurs surfaces (51a) tournées vers ledit arbre expansible (2), au moins un logement (15) configuré pour loger ledit poinçon rétractable (61) dans ladite première position;
lesdits moyens de translation (6) étant configurés pour translater axialement ledit poinçon rétractable (61) en correspondance de l'un desdits outils de séparation (5), pour positionner ledit poinçon rétractable (61) dans ladite première position pour se coupler avec l'un desdits logements (15) dudit anneau (51) dudit outil de séparation (5) et pour translater ledit poinçon rétractable (61) conjointement audit outil de séparation (5) dudit magasin de stockage (4) à une position prédéfinie sur ledit arbre expansible (2), et vice versa.

8. Unité de séparation (1) selon la revendication 7, **caractérisée en ce que** lesdits moyens de translation (6) comprennent deux poinçons rétractables (61) disposés en correspondance de deux deuxièmes fentes (14) définies dans ledit arbre expansible (2) dans des positions diamétralement opposées.

9. Unité de séparation (1) selon l'une des revendications 7 ou 8, **caractérisée en ce que** l'extrémité libre (61a) dudit au moins un poinçon rétractable (61) et lesdits logements (15) sont conformés en forme de pyramide tronquée avec des axes de développement radiaux par rapport audit arbre expansible (2).

10. Unité de séparation (1) selon l'une quelconque des revendications précédentes, **caractérisée en ce que**:
- lesdits anneaux (51) ont au moins un élément de centrage (16) faisant radialement saillie de ladite surface (51a) tournée vers ledit arbre expansible (2);
- ledit arbre expansible (2) a au moins une troisième fente (17) avec un développement sensiblement longitudinal apte à loger ledit élément de centrage (16) de sorte à éviter la rotation desdits outils de séparation (5) par rapport audit arbre expansible (2).

11. Ligne de coupe (100) de matériaux laminaires en bandes, enroulées sur des bobines, en particulier de feuilles de différentes épaisseurs, largeurs et longueurs, **caractérisée en ce qu'**elle comprend une ou plusieurs unités de séparation (1) selon l'une quelconque des revendications précédentes.
